Europäisches Patentamt

European Patent Office

Office européen des brevets

(11) Veröffentlichungsnummer : **0 134 906
B1**

(12) **EUROPÄISCHE PATENTSCHRIFT**

(45) Veröffentlichungstag der Patentschrift :
09.09.87

(51) Int. Cl.⁴ : **B 29 C 45/03**, B 29 C 45/20,
B 29 C 45/27

(21) Anmeldenummer : 84106121.1

(22) Anmeldetag : 29.05.84

(54) Angussdüse für Spritzgiessformen.

(30) Priorität : 29.06.83 DE 8318769 U

(43) Veröffentlichungstag der Anmeldung :
27.03.85 Patentblatt 85/13

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
DE-A- 2 133 824
DE-B- 1 729 333
US-A- 3 010 155

(73) Patentinhaber : Strack-Norma GmbH
Friedrich-Ebert-Strasse 109-111
D-5600 Wuppertal 1 (DE)

(72) Erfinder : Markowski, Wolfgang
Wilkhausstrasse 127
D-5600 Wuppertal 2 (DE)

(74) Vertreter : Sturies, Herbert et al
Patentanwälte Dr. Ing. Dipl. Phys. Herbert Sturies
Dipl. Ing. Peter Eichler Postfach 20 12 42
D-5600 Wuppertal 2 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung bezieht sich auf eine Angußdüse für Spritzgießformen, insbesondere für Kunststoff, mit einem hohlen metallenen Düsenschaft, der zuführseitig einen radial nach außen vorspringenden Ringbund aufweist und unterhalb des Ringbundes von einer Heizeinrichtung umgeben ist.

Bekannte Angußdüsen dieses Art werden bei Spritzgießformen verwendet, um den zu spritzenden Kunststoff z. B. von einer Maschinendüse durch eine Formplatte der Spritzgießform bis in die Nähe des Spritzbereiches zu leiten, ohne daß dabei Wärme des zu spritzenden Kuststoffes verlorengeht bzw. um den Kunststoff mit einer Heizeinrichtung temperieren zu können. Dadurch wird vermieden, daß der Kunststoff auf seinem Weg durch die Platte der Spritzgießform bzw. durch die Angußdüse soviel Wärme verliert, daß er Verdickungen bildet, die ein einwandfreies Spritzen behindern und dazu führen können, daß die Düse verstopft.

Bei Angußdüsen der eingangs genannten Art ist problematisch, daß die Beheizung des Düsenschaftes durch die Heizeinrichtung wegen des Ringbundes erst unterhalb des Ringbundes beginnen kann. Dieser Ringbund ist fast ausnahmslos unumgänglich, um die Angußdüse in der Spritzgießform ordnungsgemäß zu lagern. Der Ringbund muß darüber hinaus auch eine genügend große zuführseitige Ringfläche haben, zumindest wenn diese die Kontaktfläche zur Maschinendüse der Spritzmaschine bilden soll. Das führt zu einer vergleichsweise großen Masse des Ringbundes, die dem durchfließenden Kunststoff entsprechend viel Wärme entzieht. Infolgedessen kann es erforderlich sein, den Ringbund zusätzlich aufzuheizen. Hierzu ist es bekannt, den Ringbund auf seiner zylindrischen Mantelfläche bedarfsweise mit einem zusätzlichen Heizband zu versehen. Dieses Heizband bedarf zusätzlichen Raumes, der in der Spritzgießform vorgesehen werden muß und es ist eine besondere Zuleitung und eine besondere Regeleinrichtung bzw. eine Ergänzung der für die Heizeinrichtung erforderlichen Regeleinrichtung erforderlich, was auch einer einfachen und problemlosen Verwendung derartiger beheizter Angußdüsen in Spritzgießformen für Kunststoff entgegensteht.

Die Erfindung liegt daher die Aufgabe zugrunde, eine Angußdüse der eingangs genannten Gattung so zu verbessern, daß die Wärmezufuhr im Bereich des Ringbundes der Angußdüse unabhängig von einem außen um den Ringbund zu legenden Heizband und einer Ergänzung einer Regeleinrichtung einer Heizeinrichtung auf einfache Weise erreicht wird.

Diese Aufgabe wird dadurch gelöst, daß die Heizeinrichtung in wärmeleitender Verbindung mit mindestens einem Metalleinsatz steht, der das Schaftmetall an Wärmeleitfähigkeit übertrifft und im Ringbund angeordnet ist.

Für die Erfindung ist von Bedeutung, daß in die Konstruktion des Ringbundes eingegriffen wird, der aber seine Funktion bei der Lagerung der Angußdüse in der Spritzgießform und bei der Abstützung der Kunststoffzuleitung, insbesondere der Maschinendüse beibehalten kann. Der erfindungsgemäß vorgesehene Metalleinsatz steht mit der Heizeinrichtung in wärmeleitender Verbindung, so daß er die in der Heizeinrichtung anfallende Wärme aufgrund seiner Anordnung im Ringbund in diesen leitet, und zwar besser, als das Düsenmetall selbst, welches in erster Linie den Festigkeitsbedingungen entsprechend gewählt werden kann. Infolgedessen kann der Ringbund trotz seiner Schwächung durch den Metalleinsatz seine Abstützaufgaben ohne weiteres leisten, wozu er gegebenenfalls etwas stärker ausgeführt wird.

Der Metalleinsatz ist in Ausgestaltung der Erfindung ein zu der Bohrung der Angußdüse paralleler Stift. Ein derartiger Stift ist einfach herzustellen und problemlos in eine entsprechende Bohrung der Angußdüse bzw. des Ringbundes einzusetzen.

Der Stift ragt aus dem Ringbund in den Düsenschaft hinein und schließt bündig mit dessen Außenfläche ab. Infolgedessen können die bereits vorhandenen und in Verbindung mit der Angußdüse bewährten Heizeinrichtungen in ihren Abmessungen unverändert beibehalten werden. Es ergibt sich auch ein guter Wärmeübergang zwischen der Heizeinrichtung und dem Stift.

Der Stift ist über die gesamte Höhe des Ringbundes vorhanden, um dem Kunststoff in der Bohrung der Angußdüse die erforderliche Wärme über die gesamte Höhe des Ringbundes zuzuführen.

Das schaftseitige Ende des Stiftes steht in direktem kontakt mit der Heizeinrichtung, wodurch der bestmögliche Wärmeübergang erreicht wird. Es versteht sich aber, daß als wärmeleitende Verbindung zwischen der Heizeinrichtung und dem Stift auch eine dünne Wand des Düsenschaftes dienen kann, die zwischen der Heizeinrichtung und dem Stift vorhanden ist, um diesen gegen anderweitige Außeneinflüße abzuschirmen, oder um die Stabilität der Angußdüse zu verbessern.

Bei einer Angußdüse mit einem Distanzring an der schaftseitigen Ringfläche des Ringbundes ist die Länge des Stiftes etwa gleich der Höhe des Distanzringes, damit etwa durch den Distanzring hervorgerufene Wärmeabflüsse aus der Heizeinrichtung die möglichst gleichmäßige Wärmeverteilung bzw. den Wärmeübergang auf den Stift so wenig wie möglich beeinträchtigen.

Für eine gleichmäßige Wärmeverteilung im Ringbund sind mehrere Stifte kreisringförmig um die Düsenbohrung angeordnet.

Der oder die Stifte bestehen vorteilhafterweise aus Kupfer, das die gewünschte hohe Wärmeleitfähigkeit hat.

Die Erfindung wird anhand eines in der Zeichnung dargestellten Ausführungsbeispiels erläutert. Es zeigt :

Figur 1 einen Längsschnitt durch eine Angußdüse und

Figur 2 eine Aufsicht auf die zuführseitige Ringfläche des Ringbundes der Angußdüse der Fig. 1.

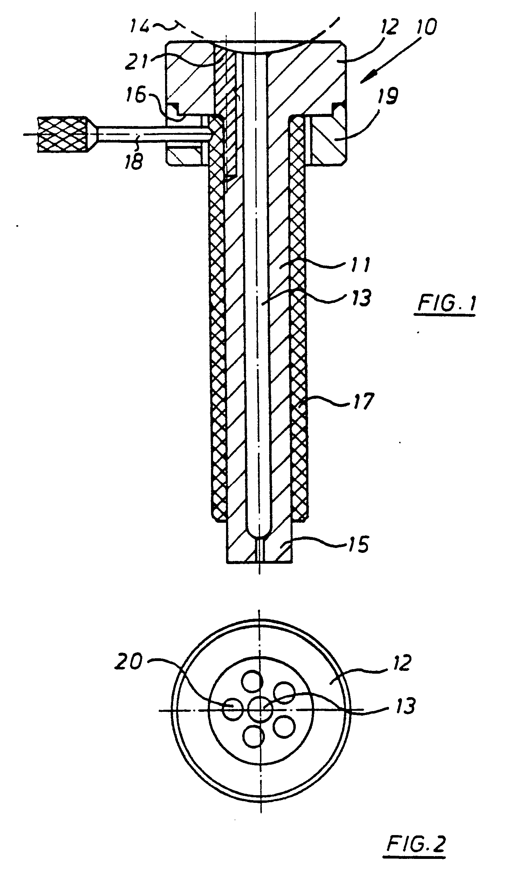

Die in Fig. 1 dargestellte Angußdüse 10 besteht im wesentlichen aus einem Düsenschaft 11, an dessen oberem Ende ein radial nach außen vorspringender Ringbund 12 angeordnet ist. In beiden ist eine durchgehende Düsenbohrung 13 vorgesehen, um zu spritzenden Kunststoff von einer gestrichelt angedeuteten Maschinendüse 14 einer Kunststoffspritzmaschine in einen Spritzbereich unterhalb des unteres Endes 15 der Angußdüse 10 zu transportieren. Die Bohrung 13 der Angußdüse 10 ist im Bereich des unteren Endes 15 verkleinert, damit der sogenannte Anguß bzw. das an den Spritzling anschließende Angußstück nur eine geringe Querschnittsfläche hat, um beim Öffnen der Spritzgießform leicht und an der gewünschten Stelle abreißen zu können.

Unterhalb des Ringbundes 12 bzw. von der schaftseitigen Ringfläche 16 des Ringbundes 12 bis zum unteren Ende 15 ist der Düsenschaft 11 von einem Heizmantel 17 einer Heizeinrichtung umgeben, die nicht näher dargestellt ist. Der Heizmantel 17 ist beispielsweise eine Heizspirale, die mit dem Wärmebedarf entsprechend eng aneinander liegenden oder weiter von einander entfernt angeordneten Windungen auf die Außenfläche des Düsenschaftes 11 gewickelt ist. Die Zuführung der elektrischen Energie erfolgt über eine Zuleitung 18, die beispielsweise an eine nicht dargestellte Stromquelle angeschlossen ist, die ihrerseits von einer Regeleinrichtung beaufschlagt wird.

An der schaftseitigen Ringfläche 16 ist ein Distanzring 19 befestigt, der dem Einbau der Angußdüse 10 in die nicht dargestellte Spritzgießform dient und dabei die Zuleitung 18 und den benachbarten Bereich des Heizmantels 17 schützt.

Neben dem oberen Ende der Düsenbohrung 13 sind gemäß Fig. 2 fünf gleichmäßig über den Umfang verteilte Bohrungen 20 im Ringbund 12 angeordnet. In den Bohrungen 20 sitzen in Fig. 1 dargestellte Metalleinsätze, die als Stifte 21 ausgebildet sind. Diese Stifte 21 werden von oben in die Angußdüse eingetrieben, so daß sie fest in den Bohrungen 20 sitzen.

Die Stifte 21 sind über die gesamte Höhe des Ringbundes 12 vorhanden und ragen mit ihren unteren Enden in den Düsenschaft 11. Die Länge der Enden ist daher so gewählt, daß sie etwa der Höhe des Distanzringe 19 entspricht. Der freiliegende Außenumfang der Stifte 21 ist bündig mit der Außenfläche des Düsenschaftes 11, so daß der hohlzylindrisch ausgebildete Heizmantel 17 abänderungsfrei auf die neue Angußdüse 10 montiert werden kann. Die aus der Fig. 1 ersichtliche Form der Stifte 21 im Bereich des oberen Endes des Düsenschaftes 11 wird dadurch erreicht, daß zylindrische Stifte in die Bohrungen 20 des Ringbundes 12 eingetrieben und abgedreht werden, so weit sie über die Außenfläche der Angußdüse 11 vorstehen.

Bei der beschriebenen Ausführungsform der Angußdüse 10 stehen die Metallstifte 21 in direktem Kontakt mit dem Heizmantel 17. Sie sind andererseits der Düsenbohrung 13 so dicht benachbart, daß sie von dem Heizmantel 17 übernommene Wärme in ausreichendem Maße auf den Kunststoff der Düsenbohrung übertragen können, so daß dieser sich im Bereich des Ringbundes nicht verfestigen kann und damit das Spritzen auch nicht behindert.

Als Werkstoff der Stifte wird Kupfer verwendet. Demgegenüber ist die Angußdüse aus Stahl, der die erforderliche mechanische Festigkeit besitzt, aber in seiner Wärmeleitfähigkeit von der Leitfähigkeit des Kupfers übertroffen wird.

**Patentansprüche**

1. Metallene Angußdüse für Spritzgießformen, insbesondere für Kunststoff, mit einem hohlen Düsenschaft, der zuführseitig einen radial nach außen vorspringenden Ringbund aufweist und unterhalb des Ringbundes von einer Heizeinrichtung umgeben ist, dadurch gekennzeichnet, daß die Heizeinrichtung (17) in wärmeleitender Verbindung mit mindestens einem Metalleinsatz steht, der das Düsenmetall an Wärmeleitfähigkeit übertrifft und im Ringbund (12) angeordnet ist.

2. Angußdüse nach Anspruch 1, dadurch gekennzeichnet, daß der Metalleinsatz ein zu der Bohrung (13) der Angußdüse (10) paralleler Stift (21) ist.

3. Angußdüse nach Anspruch 1 oder 2, dadurch gekennzeichnet, daß der Stift (21) aus dem Ringbund (12) in den Düsenschaft (11) hineinragt und bündig mit dessen Außenfläche abschließt.

4. Angußdüse nach einem der Ansprüche 1 bis 3, dadurch gekennzeichnet, daß der Stift (21) über die gesamte Höhe des Ringbundes (12) vorhanden ist.

5. Angußdüse nach einem der Ansprüche 1 bis 4, dadurch gekennzeichnet, daß das schaftseitige Ende des Stiftes (21) in direktem Kontakt mit der Heizeinrichtung (17) steht.

6. Angußdüse nach einem der Ansprüche 1 bis 5, mit einem Distanzring an der schaftseitigen Ringfläche des Ringbundes, dadurch gekennzeichnet, daß die Länge des Stiftes (21) etwa gleich der Höhe des Distanzringes (19) ist.

7. Angußdüse nach einem der Ansprüche 1 bis 6, dadurch gekennzeichnet, daß mehrere Stifte (21) kreisringförmig um die Düsenbohrung (13) angeordnet sind.

8. Angußdüse nach einem der Ansprüche 1 bis 7, dadurch gekennzeichnet, daß die Stifte (21) aus Kupfer bestehen.

**Claims**

1. Metal injector nozzle for injection moulding, particularly for plastics material, with a hollow nozzle body, which on the supply side includes a radially-outwardly-projecting annular collar and is surrounded by a heating device beneath the annular collar, characterised in that the heating device (17) is in heat-conductive connection with at least one metal insert which exceeds the nozzle metal in heat conductivity and is arranged within the annular collar (12).

2. Injector nozzle according to claim 1, characterised in that the metal insert is a pin (21) parallel to the bore (13) of the injector nozzle (10).

3. Injector nozzle according to claim 1 or 2, characterised in that the pin (21) projects from the annular collar (12) into the nozzle shank (11) and is closely connected with its outer surface.

4. Injector nozzle according to any of claims 1 to 3, characterised in that the pin (21) is present over the whole height of the annular band (12).

5. Injector nozzle according to any of claims 1 to 4, characterised in that the shank end of the pin (21) is in direct contact with the heating device (17).

6. Injector nozzle according to any of claims 1 to 5, with a distance ring on the shank side surface of the annular collar, characterised in that the length of the pin (21) is approximately the same as the height of the distance ring (19).

7. Injector nozzle according to any of claims 1 to 6, characterised in that several pins (21) arranged in a circle are disposed about the nozzle bore (13).

8. Injector nozzle according to any of claims 1 to 7, characterised in that the pin (21) consists of copper.

**Revendications**

1. Buse de coulée en métal pour des moules de coulage par injection, en particulier pour de la matière plastique, comportant un corps de buse creux qui, côté alimentation, présente une collerette annulaire faisant saillie radialement vers l'extérieur et qui, au-dessous de la collerette annulaire, est entouré par un dispositif de chauffage, caractérisée en ce que le dispositif de chauffage (17) est en liaison conductrice de chaleur avec au moins un insert métallique dont la conductibilité thermique est supérieure à celle du métal du corps et qui est disposé dans la collerette annulaire (12).

2. Buse de coulée selon la revendication 1, caractérisée en ce que l'insert métallique est une broche (21) parallèle à l'alésage (13) de la buse de coulée (10).

3. Buse de coulée selon la revendication 1 ou 2, caractérisée en ce que la broche (21) pénètre depuis la collerette annulaire (12) dans le corps de buse (11) et vient affleurer la surface externe de celui-ci.

4. Buse de coulée selon l'une des revendications 1 à 3, caractérisée en ce que la broche (21) est présente sur toute la hauteur de la collerette annulaire (12).

5. Buse de coulée selon l'une des revendications 1 à 4, caractérisée en ce que l'extrémité de la broche (21), située du côté du corps, se trouve en contact direct avec le dispositif de chauffage (17).

6. Buse de coulée selon l'une des revendications 1 à 5, comportant, contre la surface annulaire de la collerette annulaire, tournée vers le corps, un anneau d'écartement, caractérisée en ce que la longueur de la broche (21) est sensiblement égale à la hauteur de l'anneau d'écartement (19).

7. Buse de coulée selon l'une des revendications 1 à 6, caractérisée en ce que plusieurs broches (21) sont disposées en cercle autour de l'alésage (13) de la buse.

8. Buse de coulée selon l'une des revendications 1 à 7, caractérisée en ce que les broches (21) sont constituées de cuivre.

FIG.1

FIG.2

1